# EUROPEAN PATENT APPLICATION

(11) **EP 4 794 095 A1**
(43) Date of publication of application: **19.08.2026**
(21) Application number: 26152363.3
(22) Date of filing: 16.01.2026
(51) Int. Cl.: H01M 50/342, H01M 50/103, H01M 50/119

(54) **BATTERY CASE, SECONDARY BATTERY HAVING THE SAME, AND METHOD FOR MANUFACTURING THE SAME**

(30) Priority: 17.02.2025 JP 2025023781
(71) Applicant: Prime Planet Energy & Solutions, Inc., Chuo-ku, Tokyo 103-0022 (JP)
(72) Inventor: UCHIDA, Yozo, Tokyo,, 103-0022 (JP)
(74) Representative: Kuhnen & Wacker Patent- und Rechtsanwaltsbüro PartG mbB

(57) **Abstract**

A battery case for a secondary battery having a gas discharge valve provided on one flat surface, wherein the gas discharge valve comprises a first thin portion having a thickness smaller than that of the flat surface and a second thin portion formed on a surface of the first thin portion, and having a thickness even smaller than that of the first thin portion, and a residual stress at the first thin portion is greater than that at the second thin portion.

## Description

### BACKGROUND

### 1. Technical Field

The present disclosure relates to a battery case, a secondary battery having the battery case, and a method for manufacturing the battery case.

### 2. Background

A battery case of a common secondary battery has a gas discharge valve provided to prevent damage to the battery case due to the expansion of an electrode body upon charging and discharging of the secondary battery.

It has been proposed that the gas discharge valve can be reliably activated even at low internal pressure by forming a thin portion compared to other portions of the valve (see e.g., Japanese Unexamined Patent Application Publication No. 2010-202851, Japanese Unexamined Patent Application Publication No. 2009-140753).

### SUMMARY

A material with high hardness, such as stainless steel (SUS materials), can be suitably used as a material for a battery case. However, the use of such materials tends to reduce the activatability of a gas discharge valve due to their high hardness. Accordingly, the thin portion as described above needs to be formed more thinly in order to improve the activation stability of the gas discharge valve. In that case, challenges in forming a thin portion in a material with high hardness include difficult processing due to the high hardness of the material, deformation of the material during processing, manufacturability, cost, and the like.

In view of the above circumstances, an object of the present disclosure is to provide a battery case comprising a safety valve that can activate normally at and around a specified activating pressure, a secondary battery having the battery case, and a method of manufacturing the battery case.

The battery case disclosed herein has a gas discharge valve provided on one flat surface. The gas discharge valve comprises a first thin portion having a thickness smaller than that of the flat surface, and a second thin portion formed on a surface of the first thin portion and having a thickness even smaller than that of the first thin portion. In addition, the residual stress at the first thin portion is larger than that at the second thin portion.

According to this configuration, the second thin portion, which is relatively thinner, will first burst open, followed by the first thin portion. This can provide a battery case comprising a gas discharge valve with high activation stability.

In a suitable aspect of the battery case disclosed herein, the battery case has a rectangular hexahedral shape, and an intersection of a plurality of slits is formed at the center of a flat surface of the rectangular shape, and the gas discharge valve is formed on the flat surface of the rectangular shape. Here, the second thin portion is formed in a region including the intersection on the flat surface of the rectangular shape. When the internal pressure of the battery case increases, the internal pressure is most concentrated at the central portion of a surface of the battery case. Further, in a case where a plurality of slits are provided and an intersection of the plurality of slits is formed on a surface receiving the internal pressure, the internal pressure tends to concentrate at the intersection. In other words, the activatability of a gas discharge valve can be suitably improved by providing a location where the internal pressure tends to particularly concentrate when the internal pressure of a battery case increases, and by forming a second thin portion of the gas discharge valve at a region including that location.

In a suitable aspect of the battery case disclosed herein, the battery case is made of an iron material or an iron alloy steel material. The use of a material with high hardness as a material of a battery case can achieve high stability against the expansion of an electrode body upon charging and discharging of a secondary battery.

In a suitable aspect of the battery case disclosed herein, the first thin portion is a press-formed portion, and the second thin portion is formed within the press-formed portion in a plan view. The relatively larger shape of the first thin portion in a plan view, which is located closer to an outer surface of the battery case, can suitably depressurize the battery case when the gas discharge valve is activated.

The present disclosure can provide a secondary battery having the battery case as described above.

The secondary battery provided herein features a battery case comprising a gas discharge valve with high activation stability. This enables the secondary battery to suppress damage to the battery case when the expansion of an electrode body occurs due to charging and discharging of the secondary battery.

Disclosed herein is a method of manufacturing a battery case having a gas discharge valve provided on one flat surface. The gas discharge valve comprises a first thin portion having a thickness smaller than that of the flat surface, and a second thin portion formed on a surface of the first thin portion and having a thickness even smaller than that of the first thin portion. Then the method comprises:
a pressing step of forming the first thin portion by pressing process; and
a cutting or shaving step of forming the second thin portion by machining process, in which the residual stress at the first thin portion is larger than that at the second thin portion.

According to this configuration, a battery case having a gas discharge valve with high activation stability can be suitably manufactured in terms of material deformation, manufacturability, cost, and the like even when a material having a relatively high hardness is used.

In a suitable aspect of the method of manufacturing a battery case disclosed herein, the method further comprises a slit forming step, and the battery case has a rectangular hexahedral shape, and an intersection of a plurality of slits is formed at the center of a flat surface of the rectangular shape, and the gas discharge valve is formed on a surface of the rectangular shape. Here, the second thin portion is formed in a region including the intersection on the flat surface of the rectangular shape. When the internal pressure of the battery case increases, the internal pressure tends to be most concentrated at the central portion of a surface of the battery case. Further, in a case where a plurality of slits are provided and an intersection of the plurality of slits is formed on a surface receiving the internal pressure, the internal pressure tends to particularly concentrate at the intersection. In other words, a battery case can be manufactured in which the activatability of the gas discharge valve can be suitably improved by providing a location where the internal pressure tends to concentrate when the internal pressure of the battery case increases, and by forming a second thin portion of the gas discharge valve at a region including that location.

In a suitable aspect of the method of manufacturing a battery case disclosed herein, the battery case is made of an iron material or an iron alloy steel material. The use of a material with high hardness as a material of a battery case can achieve manufacture of a battery case having high stability against the expansion of an electrode body due to charging and discharging of a secondary battery.

### BRIEF DESCRIPTION OF THE DRAWINGS

FIG. 1 shows a schematic perspective view of a secondary battery 100 according to an embodiment.
FIG. 2 shows a perspective view of the secondary battery 100 in FIG. 1 with the top and bottom of the battery inverted.
FIG. 3 shows a schematic cross-sectional view of the secondary battery 100 according to an embodiment.
FIG. 4 shows a schematic cross-sectional view of a gas discharge valve 18 according to an embodiment.
FIG. 5 shows a schematic plan view of the gas discharge valve 18 according to an embodiment.
FIG. 6 schematically illustrates an activating mechanism of the gas discharge valve 18 according to an embodiment.
FIG. 7 shows a schematic view showing the configuration of an electrode body 20 housed in a battery case 10 according to an embodiment.
FIG. 8 shows a schematic flow chart of a method of manufacturing a battery case 10 according to an embodiment.
FIG. 9 shows a schematic cross-sectional view of a suitable aspect 118 of a gas discharge valve according to an embodiment.
FIG. 10 shows a schematic plan view of the suitable aspect 118 of a gas discharge valve according to an embodiment.
FIG. 11 shows a schematic flow chart of a suitable aspect of a method of manufacturing a battery case according to an embodiment.
FIG. 12 shows a graph of the results from evaluation tests on measurements of valve opening pressure.

### DETAILED DESCRIPTION

Some embodiments of the technology disclosed herein will be described below with reference to the drawings. In the following drawings, components and portions having the same effects are described with the same symbols. The dimensional relationships (length, width, thickness, and the like) in each figure do not reflect the actual dimensional relationships. Matters other than those specifically mentioned herein which are required for implementing the technology disclosed herein (e.g., general configurations and manufacturing processes of secondary batteries which are not characterized by the present disclosure) can be considered as matters of design by those skilled in the art based on conventional technologies in the art. The technology disclosed herein can be implemented based on what is disclosed herein and the technical common sense in the art. The following descriptions are not intended to limit the present disclosure to the following forms.

The expression "A to B" as used herein for indicating a range means "A or more and B or less". It shall also encompass the meaning of "more than A" and "less than B". The term "secondary battery" as used herein refers to any electricity storage devices which can be repeatedly charged and discharged as a result of the transfer of charge carriers between the positive and the negative, and represents a concept including so-called electricity storage batteries (chemical batteries) such as lithium-ion secondary batteries and sodium-ion secondary batteries, and capacitors (physical batteries) such as lithium-ion capacitors (LIC). The major components of a secondary battery according to the present disclosure will be described below. It is noted that publicly known components may be used for those of the secondary battery not listed here.

### 1. Battery case

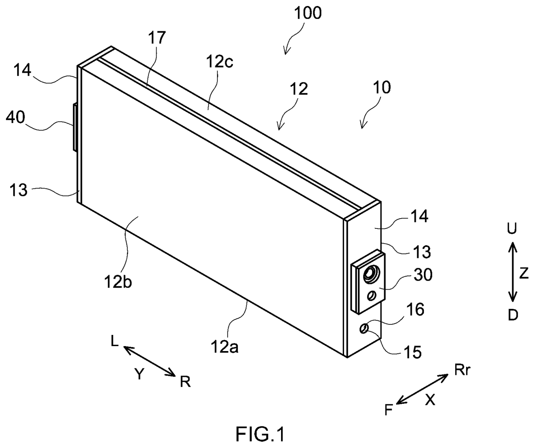

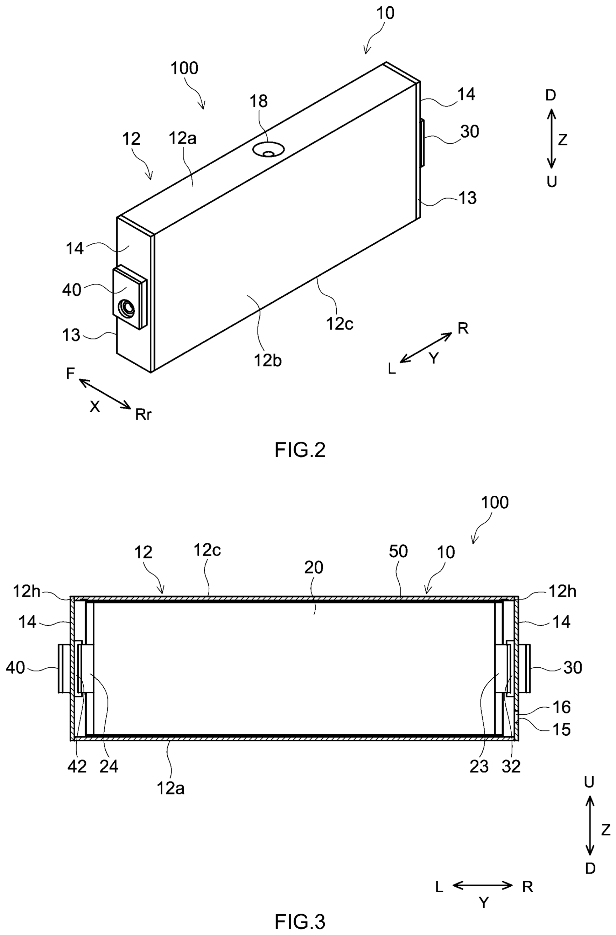

FIG. 1 shows a schematic perspective view of a secondary battery 100 according to an embodiment. FIG. 2 shows a view of the secondary battery 100 in FIG. 1 with the top and bottom of the battery inverted. FIG. 3 shows a schematic cross-sectional view of the secondary battery 100 according to an embodiment. The secondary battery 100 comprises a battery case 10 and an electrode body 20 housed inside the battery case 10. A positive terminal 30 is electrically connected to a positive electrode 22 of the electrode body 20 via a positive collector (not shown) inside the battery case 10. An negative terminal 40 is electrically connected to an negative electrode 24 of the electrode body 20 via an negative collector (not shown) inside the battery case 10. Although not shown in the figures, the secondary battery 100 here further comprises an electrolyte housed inside the battery case 10. Those components will be described below one by one.

### 1. Battery case

### (1) Battery case 10

As shown in FIG. 1, the battery case 10 is configured to have a rectangular hexahedral shape comprising a case body 12 having openings 13 at both ends and sealing plates 14 for sealing the openings 13. The battery case 10 can be air-tightly sealed (hermetically closed) and integrated by welding the sealing plate 14 along the edge of the opening 13 of the case body 12.

The case body 12 comprises a bottom wall 12c, a pair of long-side walls 12b extending from the bottom wall 12c and facing each other, and a top surface 12a facing the bottom wall 12c. The bottom wall 12c is substantially rectangular in shape. The case body 12 is formed, for example, by folding a single metal sheet into a cylindrical shape and joining (e.g., welding) the seam together. Here, the welded portion 17 is located at the bottom wall 12c.

The width of the case body 12 (the length of the long side as shown in the Y direction in FIGs. 1, 2, and 3) may be 300 mm or more. By providing such a relatively large case, a relatively large electrode body can be housed inside the case body 12. This can lead to a high-capacity secondary battery.

The width of the case body 12 (the length of the long side as shown in the Y direction in FIGs. 1, 2, and 3) may be 50 mm or less. By providing such a relatively small case, a relatively small electrode body can be housed inside the case body 12. In such a small battery, an increase in the internal pressure of the battery case due to charging and discharging is relatively small. Therefore, the activatability of the gas discharge valve needs to be further improved. A battery case according to an embodiment, which has a gas discharge valve with high activation stability, can be suitably used for manufacture of the small battery as described above.

The sealing plate 14 seals the opening 13 of the case body 12. The positive terminal 30 and the negative terminal 40 are both fixed to the sealing plate 14. The positive terminal 30 is located in one side of the battery case 10 in the width direction (right side in FIGs. 1, 2, and 3). The negative terminal 40 is located in the other side of the battery case 10 in the width direction (left side in FIGs. 1, 2, and 3). As shown in FIGs. 1, 2, and 3, the positive terminal 30 and the negative terminal 40 are exposed on an outer surface of the sealing plate 14.

The battery case 10 has a gas discharge valve 18 provided on one flat surface. In FIGs. 1 and 2, the gas discharge valve 18 is provided on an outer surface of the top surface 12a. The gas discharge valve 18 is made of the same type of material as the case body 12, for example, a metal material such as iron, SUS430, SUS403, SUS420J2, SUS440C, SUS304, SUS316, SUS329J1, SUS630.

As shown in FIGs. 1 and 2, the battery case 10 has one gas discharge valve 18, but may have two or more. The location of the gas discharge valve 18 is not limited to the top surface 12a, and the gas discharge valve 18 may be provided on a surface other than the top surface 12a, for example, the long-side wall 12b, the bottom surface 12c, the sealing plate 14, or the like.

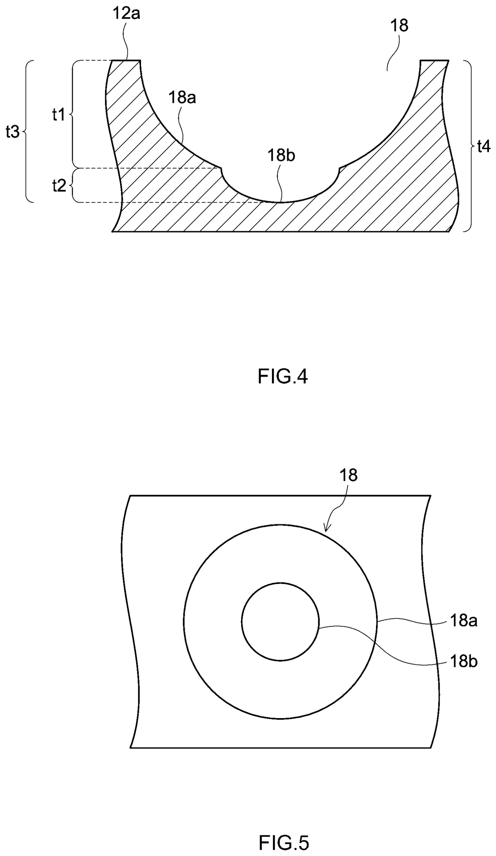

FIG. 4 shows a schematic cross-sectional view of the gas discharge valve 18 according to an embodiment. As shown in FIG. 4, the gas discharge valve 18 has a first thin portion 18a having a thickness smaller than a thickness t4 of the flat surface on which the gas discharge valve 18 is provided, and a second thin portion 18b formed on a surface of the first thin portion 18a and having a thickness even smaller than a thickness t1 of the first thin portion 18a. A thickness t3 of the gas discharge valve 18 is the total of the thickness t1 of the first thin portion and the thickness t2 of the second thin portion.

The thickness t1 of the first thin portion 18a refers to the thickness at the thinnest portion in the first thin portion 18a. The same applies to the thickness t2 of the second thin portion 18b. Therefore, it can be said that a location where the thickness t1 of the first thin portion 18a is measured corresponds to the boundary between the first thin portion 18a and the second thin portion 18b.

A method of forming the gas discharge valve 18 comprises: first forming the first thin portion 18a by pressing process; and then forming the second thin portion 18b by machining process. It is noted that the method of forming the gas discharge valve 18 will be described in detail below.

FIG. 5 shows a schematic plan view of the gas discharge valve 18 according to an embodiment. As shown in FIG. 5, the shape of the gas discharge valve 18 is circular in a plan view, but not particularly limited to this. For example, it may be elliptical, rectangular, or other shapes in a plan view. It may be adjusted appropriately depending on the area of a location where the first thin portion 18a is formed and the activating pressure of the gas discharge valve.

There is no particular limitation for the shape of the second thin portion 18b, and it may be elliptical, rectangular, or other shapes in a plan view as in the shape of the first thin portion 18a. It may be adjusted appropriately depending on the area of a location where the second thin portion 18b is formed, the activating pressure of the gas discharge valve, and the like.

In view of achieving suitable manufacture in terms of manufacturability and cost by increasing a processing amount of pressing process, the thickness t1 of the first thin portion may preferably be 55% or more, more preferably 60% or more, and in particular preferably 65% or more when the thickness t3 of the entire gas discharge valve 18 is 100%. It is noted that if the thickness t1 of the first thin portion 18a is too thin, i.e., if the processing amount of pressing process is too large, deformation of a material such as distortion and undulation may occur during pressing process, resulting in an unusable battery case. Accordingly, the thickness t1 of the first thin portion 18a may preferably be 90% or less, more preferably 80% or less, and in particular preferably 70% or less when the thickness t3 of the entire gas discharge valve is 100%.

In view of manufacturing efficiency and cost for forming a gas discharge valve, the thickness t2 of the second thin portion may preferably be 45% or less, more preferably 40% or less, and in particular preferably 35% or less when the thickness t3 of the entire gas discharge valve is 100%. It is noted that if the thickness of the second thin portion is too thin, the processing amount of machining process is too large, resulting in decreased manufacturing efficiency and increased cost. Accordingly, the thickness t2 of the second thin portion 18b may preferably be 10% or more, more preferably 20% or more, and in particular preferably 30% or more when the thickness t3 of the entire gas discharge valve is 100%.

The electrode body expands due to charging and discharging of the secondary battery, resulting in increased internal pressure of the battery case. This will activate the gas discharge valve. In other words, the internal pressure of the battery case will be the activating pressure of the gas discharge valve. The activating pressure of the gas discharge valve 18 can typically be 0.1 to 10 MPa, for example, 0.3 to 5 MPa, 1 to 3 MPa. It is noted that the activating pressure of the gas discharge valve refers to a pressure at which the second thin portion, which will break more easily, begins to break.

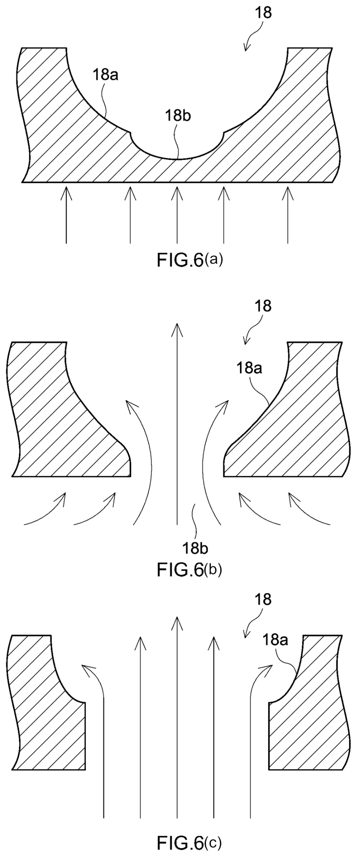

FIG. 6 schematically illustrates an activating mechanism of the gas discharge valve 18 according to an embodiment. The arrows in FIG. 6 represent the internal pressure of the battery case. In the gas discharge valve 18 according to an embodiment, the internal pressure of the battery case 10 increases due to charging and discharging and the like of the secondary battery (FIG. 6(a)). At the same time when the internal pressure of the battery case 10 reaches the activating pressure of the gas discharge valve, the second thin portion 18b, which is thinner, breaks (FIG. 6(b)). Then, the first thin portion 18a breaks due to the continued internal pressure received by the first thin portion 18a (FIG. 6(c)). As a result, the inside of the battery case 10 is depressurized.

In the gas discharge valve 18, the residual stress at the first thin portion 18a is larger than that at the second thin portion 18b. Residual stress refers to stress which remains in an object after an external force applied to deform it is released. In other words, residual stress is thought to affect the strength and durability of a material after processing. In general, residual stress due to tension tends to reduce the strength of a material, while residual stresses due to compression tends to increase the strength of a material. Residual stress is generated by applying an external force to deform an object. Therefore, the presence or absence of material deformation due to processing, i.e., differences in processing methods may produce difference in residual stress when two objects having the same shape after material processing are compared.

Methods of measuring residual stress include, for example, X-ray stress measurement and electron back scatter diffraction (EBSD). The distribution of residual stress is not uniform in a material. Therefore, residual stress is measured at 10 randomly selected locations each in the first thin portion and the second thin portion, and the average value calculated from these measurements is used as the residual stress in the present specification.

It is noted that a method of distinguishing the first thin portion from the second thin portion is not limited to the analytical methods as described above. The methods include, for example, resistance measurement, thermal conductivity measurement, hardness measurement, brightness measurement, surface roughness measurement, visual evaluation, tactile evaluation, and the like.

Pressing process refers to a processing method in which a material is deformed by applying an external force. In other words, a location where material deformation is caused by tension may be created on a surface subjected to pressing process. The density of metal atoms is relatively reduced in a location where tensile deformation occurs as described above. Therefore, the first thin portion formed by pressing process may have a higher resistance value than the second thin portion.

As described above, the density of metal atoms is relatively reduced in a region where tensile deformation occurs on a surface subjected to pressing process. Therefore, the first thin portion formed by pressing process may have a lower thermal conductivity than the second thin portion.

As described above, a location where the density of metal atoms is relatively reduced may be created on a surface subjected to pressing process. Therefore, the first thin portion formed by pressing process may have a lower hardness than the second thin portion.

Machining process refers to a processing method in which a volume of a material is removed by cutting or shaving. Therefore, a material may have a metallic luster on a surface subjected to machining process, leading to increased brightness. Therefore, the second thin portion formed by machining process may have a higher brightness than the first thin portion.

As described above, machining process refers to a processing method in which a volume of a material is removed by cutting or shaving. Therefore, a machining mark may be generated on a surface subjected to machining process, resulting in increased surface roughness. Therefore, the second thin portion formed by machining process may have a higher surface roughness than the first thin portion.

Unlike the various analytical methods described above, visual and tactile evaluations are not quantitative, but can be used to qualitatively evaluate and distinguish differently processed surfaces.

### (2) Electrode body 20

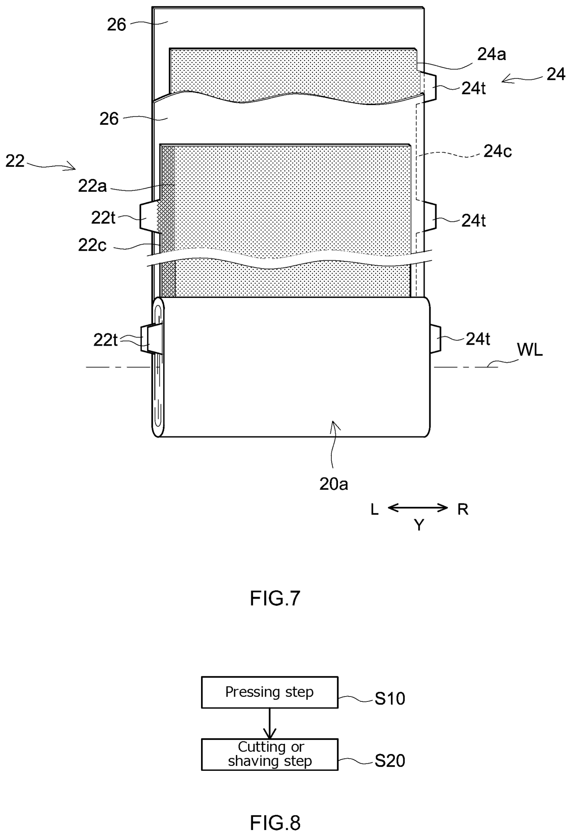

FIG. 7 shows a schematic view showing the configuration of an electrode body 20 housed in a battery case 10. The electrode body 20 has a positive electrode 22 and an negative electrode 24. The electrode body 20 here is a flattened wound electrode body formed by being wound around the winding axis WL in which a positive electrode 22 in the form of a strip and an negative electrode 24 in the form of a strip are stacked via a separator 26 in the form of a strip.

As shown in FIG. 7, the positive electrode 22 has a positive substrate 22a and a positive active material layer 22c formed on at least one surface of the positive substrate 22a (on the both surfaces in this case).

The positive substrate 22a is of strip-shaped. For example, the positive substrate 22a is made of an electronically conductive metal, such as aluminum, aluminum alloy, nickel, and stainless steel. The positive substrate 22a here is made of metal foil, specifically aluminum foil.

As shown in FIG. 7, the positive active material layer 22c is provided in the form of a strip along the longitudinal direction of the positive substrate 22a in the form of a strip. The positive active material layer 22c includes a positive active material which can reversibly occlude and release charge carriers. The positive active material may preferably include at least one of Ni, Co, and Mn. For example, lithium transition metal composite oxides such as lithium-nickel-cobalt-manganese composite oxide can be used. The positive active material may generally account for 80 mass% or more, typically 90 mass% or more, for example 95 mass% or more when the total solid content of the positive active material layer 22c is 100 mass%. The positive active material layer 22c may include an optional component other than the positive active material, for example, an electronically conductive material, a binder, various additive components, and the like. For example, a carbon material such as carbon black (e.g., acetylene black (AB)) can be used as an electronically conductive material. For example, PVdF and the like can be used as a binder.

As shown in FIG. 7, a plurality of positive tabs 22t protrude from an edge of the electrode body 20 in the longitudinal direction Y. The plurality of positive tabs 22t are provided at intervals along the longitudinal direction of the positive electrode 22 in the form of a strip. The tabs here are rectangular in shape, but can be of various other shapes (e.g., trapezoidal and the like). At least a portion of the positive tab 22t has a region where the positive active material layer 22c is not formed, and the positive substrate 22a is exposed.

As shown in FIG. 7, the negative electrode 24 has an negative substrate 24a, and an negative active material layer 24c formed on at least one surface of an negative substrate 24a (on the both sides in this case).

The negative substrate 24a is of strip-shaped. For example, the negative substrate 24a is made of an electronically conductive metal, such as copper, copper alloy, nickel, and stainless steel. The negative substrate 24a here is metal foil, specifically copper foil.

The negative active material layer 24c is provided in the form of a strip along the longitudinal direction of the negative substrate 24a in the form of a strip. The negative active material layer 24c includes an negative active material (e.g., a carbon material such as graphite, Si, and an Si compound such as SiO) which can reversibly occlude and release charge carriers. As an Si compound, a silicon oxide represented by SiOₓ (0.05 < x < 1.95), a lithium silicon oxide represented by LiₓSi_{y}O_{z} (x, y, and z independently satisfy 0 ≤ x, y, z ≤ 1), a lithium-containing lithium-silicon alloy represented by Li₂₁Si₅, and the like can be used. The negative active material may generally account for 80 mass% or more, typically 90 mass% or more, for example, 95 mass% or more when the total solid content of the negative active material layer 24c is 100 mass%. The negative active material layer 24c may include an optional component other than the negative active material, for example, a binder, a dispersing agent, various additive components, and the like. Rubbers such as styrenebutadiene rubber (SBR) and the like can be used as binders. Celluloses such as carboxymethylcellulose (CMC) and the like can be used as dispersing agents.

In particular when Si or an Si compound is used as the above negative active material, a high performance secondary battery with high capacity can be provided because a large amount of charge carriers (such as lithium ions) per unit area can be inserted/removed. When Si or an Si compound is used as the negative active material, the electrode body may significantly expand upon charging and discharging because of a large volume change upon insertion/removal of charge carriers (such as lithium ions). If the activation stability of the gas discharge valve is poor, the battery case is likely to be damaged at this time. However, a battery case according to the present disclosure comprises a gas discharge valve with high activation stability and a material with high hardness is used as a material for the battery case. Therefore, damage to the battery case can be suppressed even when Si or an Si compound is used as an negative active material.

As shown in FIG. 7, a plurality of negative tabs 24t protrude from an edge of the electrode body 20 in the longitudinal direction Y. The plurality of negative tabs 24t are provided at intervals along the longitudinal direction of the negative electrode 24 in the form of a strip. The tabs here are rectangular in shape, but can be of various other shapes (e.g., trapezoidal and the like). At least a portion of the negative tab 24t has a region where the negative active material layer 24c is not formed, and the negative substrate 24a is exposed.

The separator 26 is a member for insulating the positive active material layer 22c of the positive electrode 22 from the negative active material layer 24c of the negative electrode 24. For example, a porous resin sheet made of a polyolefin resin such as polyethylene (PE), polypropylene (PP), and the like is suitable as the separator 26. The separator 26 may have a heat resistance layer (HRL) including an inorganic filler provided on a surface of the resin sheet. For example, alumina, boehmite, aluminum hydroxide, titania, and the like can be used as an inorganic filler. Further, an adhesive layer may preferably be provided on one or both surfaces of the separator 26. The adhesive layer can improve adhesion to the positive material layer or the negative active material layer which is to be brought into contact. The adhesive layer may contain, for example, polyvinylidene fluoride (PVdF) as an adhesive component. The adhesive layer can also contain inorganic particles of alumina, boehmite, or the like. The adhesive layer may be provided on a surface of the above resin sheet or on a surface of HRL.

### (3) Electrolyte

There is no particular limitation for a nonaqueous electrolyte, and a conventional nonaqueous electrolyte may be used. The nonaqueous electrolyte may contain, for example, a nonaqueous solvent and a supporting salt. The nonaqueous solvent may include carbonates such as, for example, ethylene carbonate, dimethyl carbonate, and ethyl methyl carbonate. The supporting salt may be, for example, a fluorine-containing lithium salt such as LiPF₆. However, the nonaqueous electrolyte may be in the form of solid (solid electrolyte) and may be integrated with a group of the electrode bodies 20.

### 2. Method of manufacturing battery case

FIG. 8 shows a schematic flow chart of a method of manufacturing a battery case 10 according to an embodiment. The method of manufacturing the battery case 10 comprises the following steps: a pressing step S10 of forming a first thin portion by pressing process; and a cutting or shaving step S20 of forming a second thin portion by machining process. Those steps will be described below.

### (1) Pressing step S10

In the pressing step S 10, the first thin portion 18a is formed on one flat surface of the battery case 10 by pressing process. Pressing process refers to a processing method in which a material is deformed by applying an external force. The use of pressing process on a metal material can provide advantages in terms of manufacturing efficiency and cost. However, there is a disadvantage in that deformation such as distortion and undulation can occur in a metal material depending on the processing amount thereof. In the pressing step S 10, pressing process may be performed to the extent where the deformation does not occur, or the deformation occurs but does not adversely affect the performance of the battery case. There is no particular limitation for the method of pressing process, and drawing, protrusion, bending, coining, and the like can be used.

### (2) Cutting or shaving step S20

In the cutting or shaving step S20, the second thin portion 18b is formed by machining process. Machining process refers to a processing method in which a volume of a material is removed by cutting or shaving. Unlike the pressing step S10, the cutting or shaving step S20 has an advantage in that it does not involve deformation of a material due to processing. However, it has a disadvantages in terms of processing efficiency, cost, and the like. In the cutting or shaving step S20, machining process is performed on a region including a location of the thinnest wall thickness in the first thin portion 18a after the pressing step S10. There is no particular limitation for the method of machining process, and, for example, turning process and milling process may be used.

As described above, in the method of manufacturing the battery case 10, pressing process is combined with machining process for forming the gas discharge valve 18. This enables suitable production of a battery case comprising a gas discharge valve having a thin-wall and high activation stability as the disadvantages of pressing process and machining process are mutually compensated.

In the gas discharge valve 18 formed by the above manufacturing method, deformation of a material due to pressing process is observed at the first thin portion 18a. On the other hand, a machining mark due to machining process is observed at the second thin portion 18b. Further, when analyzing residual stress of the first thin portion and the second thin portion, the first thin portion 18a, which is subjected to pressing process and material deformation, has higher residual stress. It is noted that the first thin portion 18a can be distinguished from the second thin portion 18b even by using methods other than the analysis of residual stress as described above.

In the cutting or shaving step S20, the second thin portion 18b may be formed by laser processing. Laser processing refers to a manufacturing method in which a volume of a material is removed by melting and cutting a metal material. When laser processing is performed as described above at the cutting or shaving step, change in residual stress due to thermal history and melt marks caused by laser irradiation may be observed in the second thin portion 18b.

In a suitable aspect of a battery case according to an embodiment, the battery case has a rectangular hexahedral shape, and an intersection of a plurality of slits is formed at the center of a flat surface of the rectangular shape, and a gas discharge valve is formed on the flat surface of the rectangular shape. Here, the second thin portion 118b is formed in a region including the intersection 119b on the flat surface of the rectangular shape.

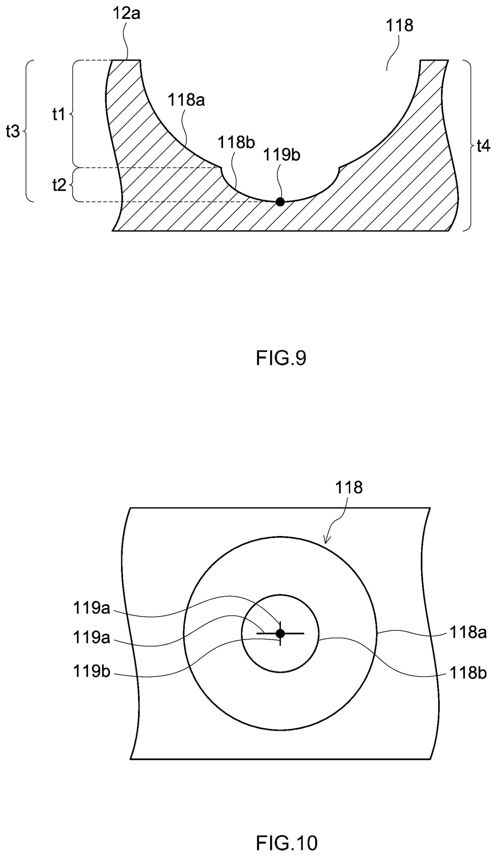

FIG. 9 shows a schematic cross-sectional view of a suitable aspect 118 of a gas discharge valve according to an embodiment. FIG. 10 shows a schematic plan view of the suitable aspect 118 of a gas discharge valve according to an embodiment. FIGs. 9 and 10 show only a gas discharge valve of a secondary battery as a characteristic part according to an embodiment, and other parts are omitted because they have similar configurations as the secondary battery 100 according to the aforementioned embodiment.

When the internal pressure of a secondary battery increases, the internal pressure is most concentrated at the center of a surface of the battery case. That is, in a case where a surface receiving the internal pressure is rectangular, the internal pressure tends to concentrate at an intersection of the bisectors of the short and long sides. Further, in a case where slits are provided within a pressure-receiving surface, the internal pressure tends to concentrate along the slits (hereinafter may also be referred to as line pressure) on the surface. It is noted that when a plurality of slits are provided and an intersection of the plurality of slits is formed within a pressure-receiving surface, the internal pressure (hereinafter may also be referred to as point pressure) tends to concentrate at the intersection even more than at the line pressure.

Therefore, the activation stability of the gas discharge valve 118 can be suitably enhanced by forming an intersection 119b of a plurality of slits 119a at the center of a surface on which the gas discharge valve 118 is to be formed, and further by forming a second thin portion 118b of the gas discharge valve 118 in a region including the intersection 119b.

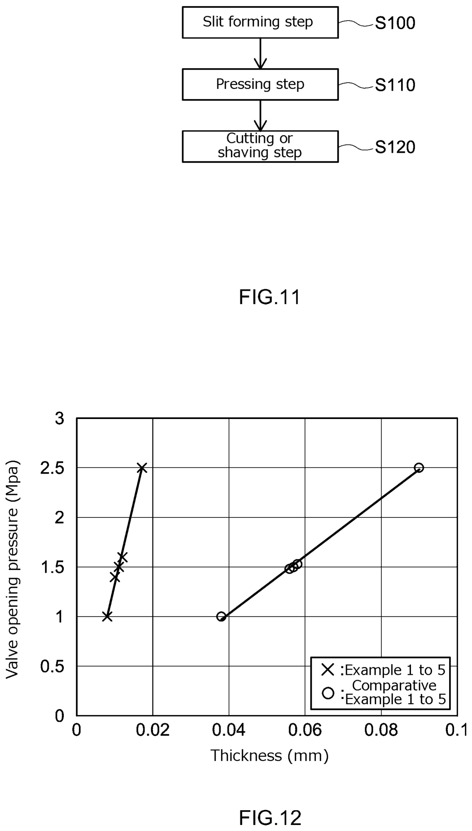

FIG. 11 shows a schematic flow chart of a suitable aspect of a method of manufacturing a battery case according to an embodiment. This manufacturing method represents a suitable aspect of a method of manufacturing a battery case according to an embodiment, the method comprising the following steps: a slit forming step S 100 of forming a slit on a flat surface of the battery case; a pressing step S 110 of forming a first thin portion by pressing process; and a cutting or shaving step S120 of forming a second thin portion by machining process. Those steps will be described below.

There is no particular limitation for the method of forming a slit 119a within a surface where a gas discharge valve 118 is to be formed in the slit forming step S100. The method may be, for example, pressing process, machining process, etching process, or the like. The number of the slit 119a may be any as long as the intersection 119b can be formed, and at least two slits are required. The slit 119a may be formed to the extent that the intersection 119b of these is formed within a surface where it is to be formed. The depth of the slit 119a may be adjusted appropriately according to a valve opening pressure of the gas discharge valve 118.

The pressing step S110 and the cutting or shaving step S120 may be performed in a similar manner as the pressing step S10 and the cutting or shaving step S20 in the method of manufacturing the battery case 10 according to the embodiment as described above.

In a suitable aspect of a battery case according to an embodiment, the battery case is made of an iron material or an iron alloy steel material. The use of a material with high hardness for a battery case can effectively suppress damage to the battery case caused by the expansion of an electrode body upon charging and discharging of a secondary battery. Materials which can be used for a battery case include, for example, iron, SUS430, SUS403, SUS420J2, SUS440C, SUS304, SUS316, SUS329J1, SUS630, and others.

Materials with high hardness, such as SUS materials, have high stability against the expansion of an electrode body upon charging and discharging, and thus can be suitably used for a battery case. However, such materials tend to cause poor activation of a gas discharge valve due to their high hardness. Therefore, it is necessary to install a gas discharge valve having a thinner wall. This may cause deformation of a material such as distortion and undulation, making it unusable as a battery case when attempting to form a thin portion of a gas discharge valve even thinner solely by pressing process. On the other hand, forming a gas discharge valve by machining process is inefficient in terms of manufacturability and cost. In contrast, according to the method of manufacturing a battery case according to an embodiment, the combination of pressing process and machining process to form a gas discharge valve can suitably form a thinner wall portion on the battery case even when a material with high hardness is used.

In a suitable aspect of a battery case according to an embodiment, the first thin portion is a press-formed portion, and the second thin portion is formed within the press-formed portion in a plan view. According to this, by making the area of the first thin portion located closer to the outer surface of the battery case relatively larger in a plan view, a pressure relieving area may be increased when the gas discharge valve bursts open. This allows the inside of the battery case to be effectively depressurized.

### 3. Secondary battery

According to a secondary battery having a battery case according to an embodiment, damage to the battery case caused by the expansion of an electrode body upon repeated charging and discharging of the secondary battery can be suppressed.

### <Evaluation Test>

### (1) Presence or absence of material deformation by pressing process

### [1] Example 1

A material of SUS304 with a thickness of 0.65 mm was prepared. That SUS304 material was press-processed at a pressure of 40 GPa until its thickness reached 0.2 mm. Then, the periphery of the pressed surface was visually inspected to determine if deformation such as distortion and undulation occurred in the SUS304 material used.

### [2] Comparative Example 1

Evaluation tests were conducted as in Example 1 except that the thickness after pressing process was 0.055 mm.

### (2) Measurement of valve opening pressure of gas discharge valve

### [1] Example 1

The valve opening pressure of a gas discharge valve when the internal pressure of the battery case increased was determined by performing simulation. In Example 1, a simulation was performed on a secondary battery in which one gas discharge valve was provided on one flat surface of a battery case made of SUS304. The battery case has an intersection of a plurality of slits formed at the center of the flat surface, and a second thin portion of the gas discharge valve formed in the area including that intersection. Then, the internal pressure of the battery case was gradually increased, and the valve opening pressure was defined as the internal pressure at which the second thin portion began to break.

### [2] Examples 2 to 5

Evaluation tests were conducted in the same manner as in Example 1 except that the wall thickness of the second thin portion of the gas discharge valve was altered.

### [3] Comparative Examples 1 to 5

Evaluation tests were conducted in the same manner as in Example 1 except that the configuration of slits and the wall thickness of the second thin portion were altered.

### <Evaluation results>

### (1) Presence or absence of material deformation by pressing process

Table 1 shows the evaluation results.

### [Table 1]

**Table 1**

| | Pre-press thickness (mm) | Post-press thickness (mm) | Deformation rate (%) | Material deformation |
|---|---|---|---|---|
| Example 1 | 0.65 | 0.2 | 69 | No |
| Comparative Example 1 | 0.65 | 0.055 | 92 | Yes |

### (2) Valve opening pressure of gas discharge valve

Table 2 and FIG. 12 show the evaluation results.

### [Table 2]

**Table 2**

| | Slit configuration |
|---|---|
| Example 1 | Two straight lines, with an intersection |
| Example 2 | Two straight lines, with an intersection |
| Example 3 | Two straight lines, with an intersection |
| Example 4 | Two straight lines, with an intersection |
| Example 5 | Two straight lines, with an intersection |
| Comparative Example 1 | One straight line |
| Comparative Example 2 | One straight line |
| Comparative Example 3 | One straight line |
| Comparative Example 4 | One straight line |
| Comparative Example 5 | One straight line |

As shown in Table 1, no material deformation was observed around the pressed surface after pressing process for Example 1 with a deformation rate of 69%. In contrast, material deformation was observed around the pressed surface after pressing process for Comparative Example 1 with a deformation rate of 92%. As shown in Table 2 and FIG. 12, it was confirmed that the gas discharge valve had a higher activatability for Examples 1 to 5 where the pressure-receiving mode was point pressure and line pressure as compared to Comparative Examples 1 to 5 where the pressure-receiving mode was only line pressure. That is, Examples 1 to 5 demonstrate that the gas discharge valve can be activated even when the thickness is relatively large, and the activating pressure is relatively low.

Although detailed descriptions are provided with reference to specific embodiments, these are merely illustrative and shall not limit the scope of the claims. The technology described in the claims encompasses various modifications and alterations of the embodiments described above.

As described above, the present specification includes the disclosures set forth in the following items.

### Item 1:

A battery case for a secondary battery having a gas discharge valve provided on one flat surface, wherein
the gas discharge valve comprises:
a first thin portion having a thickness smaller than that of the flat surface; and
a second thin portion formed on a surface of the first thin portion, and having a thickness even smaller than that of the first thin portion,
   a residual stress at the first thin portion being greater than that at the second thin portion.

### Item 2:

The battery case according to Item 1, wherein the battery case has a rectangular hexahedral shape, and the gas discharge valve is formed on a flat surface of the rectangular shape, and the second thin portion is formed in a region including an intersection on the flat surface of the rectangular shape.

### Item 3:

The battery case according to Item 1 or 2, which is made of an iron material or an iron alloy steel material.

### Item 4:

The battery case according to any one of Items 1 to 3, wherein the first thin portion is a press-formed portion, and the second thin portion is formed within the press-formed portion in a plan view.

### Item 5:

A secondary battery having the battery case according to any one of Items 1 to 4.

### Item 6:

A method of manufacturing a battery case having a gas discharge valve provided on one flat surface, wherein
the gas discharge valve comprises:
a first thin portion having a thickness smaller than that of the flat surface; and
a second thin portion formed on a surface of the first thin portion, and having a thickness even smaller than that of the first thin portion, and
   a residual stress at the first thin portion being greater than that at the second thin portion,
the method comprising:
a pressing step of forming the first thin portion by pressing process; and
a cutting or shaving step of forming the second thin portion by machining process.

### Item 7:

The method of manufacturing a battery case according to Item 6, the method further comprising a slit forming step, wherein the battery case has a rectangular hexahedral shape, and an intersection of a plurality of slits is formed at the center of a flat surface of the rectangular shape, and the gas discharge valve is formed on the flat surface of the rectangular shape, and the second thin portion is formed in a region including the intersection on the flat surface of the rectangular shape.

### Item 8:

The method of manufacturing a battery case according to Item 6 or 7, wherein the battery case is made of an iron material or an iron alloy steel material.

### Description of the reference numerals

- 10: Battery case
- 12: Case body
- 12a: Bottom wall
- 12b: long-side wall
- 12c: Top surface
- 13: Opening
- 14: Sealing plate
- 15: Liquid inlet
- 16: Sealant member
- 17: Welded portion
- 18: Gas discharge valve
- 18a: First thin portion
- 18b: Second thin portion
- 20: Electrode body
- 22: Positive electrode
- 22a: Positive substrate
- 22c: Positive active material layer
- 22t: Positive tab
- 24: Negative electrode
- 24a: Negative substrate
- 24c: Negative active material layer
- 24t: Negative tab
- 26: Separator
- 30: Positive terminal
- 40: Negative terminal
- 100: Secondary battery
- 110: Battery case
- 112: Case body
- 112a: Bottom wall
- 112b: Long-side wall
- 112c: Top surface
- 113: Opening
- 114: Sealing plate
- 115: Liquid inlet
- 116: Sealant member
- 117: Welded portion
- 118: Gas discharge valve
- 118a: First thin portion
- 118b: Second thin portion
- 200: Secondary battery

## Claims

1. A battery case (10) for a secondary battery (100) having a gas discharge valve (18) provided on one flat surface,
the gas discharge valve (18) comprises:
a first thin portion (18a) having a thickness smaller than that of the flat surface; and
a second thin portion (18b) formed on a surface of the first thin portion (18a), and having a thickness even smaller than that of the first thin portion (18a),
a residual stress at the first thin portion (18a) being greater than that at the second thin portion (18b).

2. The battery case (10) according to claim 1, wherein
the battery case (10) has a rectangular hexahedral shape,
an intersection (119b) of a plurality of slits (119a) is formed at the center of a flat surface of the rectangular shape,
the gas discharge valve (118) is formed on the flat surface of the rectangular shape, and
the second thin portion (118b) being formed in a region including the intersection (119b) on the flat surface of the rectangular shape.

3. The battery case (10) according to claim 1 or 2, wherein the battery case (10) is made of an iron material or an iron alloy steel material.

4. The battery case (10) according to any one of claims 1 to 3, wherein the first thin portion (18a) is a press-formed portion, and the second thin portion (18b) is formed within the press-formed portion in a plan view.

5. A secondary battery (100) having the battery case (10) according to any one of claims 1 to 4.

6. A method of manufacturing a battery case (100) having a gas discharge valve (18) provided on one flat surface, wherein
the gas discharge valve (18) comprises:
a first thin portion (18a) having a thickness smaller than that of the flat surface; and
a second thin portion (18b) formed on a surface of the first thin portion (18a) , and having a thickness even smaller than that of the first thin portion (18a), and
a residual stress at the first thin portion (18a) being greater than that at the second thin portion (18b),
the method comprising:
a pressing step of forming the first thin portion (18a) by pressing process; and
a cutting or shaving step of forming the second thin portion (18b) by machining process.

7. The method of manufacturing a battery case (10) according to claim 6,
the method further comprising a slit forming step, wherein
the battery case (10) has a rectangular hexahedral shape,
an intersection (119b) of a plurality of slits (119a) is formed at the center of a flat surface of the rectangular shape, and
the gas discharge valve (118) is formed on the flat surface of the rectangular shape,
the second thin portion (118b) being formed in a region including the intersection (119b) on the flat surface of the rectangular shape.

8. The method of manufacturing a battery case (10) according to claim 6 or 7, wherein the battery case (10) is made of an iron material or an iron alloy steel material.
